# EUROPEAN PATENT SPECIFICATION

(11) **EP 2 584 419 B1**
(45) Date of publication and mention of the grant of the patent: **15.11.2017**
(21) Application number: 12475502.6
(22) Date of filing: 05.10.2012
(51) Int. Cl.: G05B 19/401

(54) **CNC machine for cutting with plasma, oxygen and water jet used as a cutting tool with automatic setting up a precise position of a cutting tool in a cutting head by autocalibration and method thereof**
CNC-Maschine zum Schneiden mit Plasma-, Sauerstoff- und Wasserstrahl als Schneidwerkzeug mit automatischer Einstellung einer präzisen Position eines Schneidwerkzeugs in einem Schneidkopf durch Autokalibrierung sowie Verfahren dafür
Machine CNC de découpe par plasma, oxygène et jet d'eau utilisés comme outil de coupe avec réglage automatique de position précise d'un outil de coupe dans une tête de coupe par auto-étalonnage et procédé associé

(30) Priority: 21.10.2011 SK 500402011
(43) Date of publication of application: 24.04.2013
(73) Proprietor: MicroStep spol. s r.o., 831 04 Bratislava (SK)
(72) Inventor: Varga, Alexander, Ing. PhD., 83103 Bratislava (SK)
(74) Representative: Fajnorova, Maria

(56) References cited:
- EP-A1- 2 290 486
- FR-A1- 2 928 289
- US-A1- 2003 037 588
- US-A1- 2008 114 485
- US-A1- 2009 084 235
- US-A1- 2010 301 020

## Description

### Field of the invention

The present invention relates to the CNC machines for cutting by plasma, oxygen and water jet with automatic setting up a precise position of a cutting tool in a cutting head by autocalibration, designed for cutting materials in machinery, metal industry and wide range of working processes as well, where these cutting technologies can be applied. The present invention also relates to such calibration method.

### Background of the invention

Currently produced CNC machines designed for 3D cutting of materials by using the technology of plasma, oxygen a water jet cutting are equipped with mechanical calibration system for precise setting of position of a cutting tool - a torch or a cutting nozzle in a kinematic chain of the machine, so that the real position of the cutting tool is identical with the required position of the cutting tool within the whole range of cutting tool motions. Since collisions of the cutting tool with the material being cut can often occur due to technological reasons during the cutting process, these tools are kept in anti-collision holders which are not able to provide perfect return of the cutting tool to its set position after elimination of the collision. In order to achieve high accuracy of the cutting process it is often necessary to set the position of the cutting tool mechanically, but such process is time consuming and reduces productivity of the cutting machine. To make the calibration process easier, different calibration systems are used which make the mechanical setting process easier. However, despite these calibration aids the calibration process is still time consuming, it requires skilled professional operator and represents significant loss of production time of the machine.

In the case that the machine is fitted with several cutting heads, the calibration process is much more demanding in terms of time and need of skilled professional operator of the machine.

Such a technical solutions belonging to the closest state of the art are disclosed e.g. in US Patent Application No. 2009/0084235 A1 (Kata Akira et al), filed on April 02, 2009, US Patent Application No. US 2010/301020 A1 (Phillip D C et al), filed on December 02, 2010, European Patent Application No. 09252103.8 published as EP 2 290 486 A1 (Renishaw plc), filed on March 02, 2013 and US Patent Application No. US 2003/037588 A1 (Schaefer E), filed on February 27, 2013.

Document US 2009/084235 A1 discloses an origin correction method of matching a set processing top point with a machine top point of a high pressure jet in a jetting apparatus having a two-axis angle control for controlling tilt and -pivot angles other than a three-axis control consisting of X, Y, Z-axes includes: a jet radial-runout measurement process of measuring a position of the jet passing through an XY-plane; a jet radial-runout correction process of calculating an error at the processing top point and correcting radial runout of the jet; a jet top-point variation measurement process of changing the tilt angle and measuring two positions, where the jet passes through the XY-plane; and a jet top-point variation correction process of calculating an error at the processing top point from position data of the two positions and correcting a deviation of the processing top point.

US 2010/301020 A1 discloses a method of operating a plasma arc torch system includes placing a work piece to be cut on a table of the plasma arc torch system, wherein at least a portion of the work piece has a planer surface facing away from the table. A plasma arc torch is positioned adjacent the planer surface of the work piece using a positioning apparatus, wherein the positioning apparatus has at least five degrees of freedom about which it can move the plasma arc torch relative the work piece for cutting the work piece on the table. The method further includes angling the torch relative the planer surface of the work piece such that the torch is held at an angle of between about 1 and about 4 degrees from perpendicular with the planer surface to back burn a produced kerf such that a kerf edge is perpendicular relative the planer surface of the work piece. Additionally, the planer surface of the work piece is calculated by contacting the work piece with the torch at least three times.

In the European Patent Application EP 2 290 486 A1 there is disclosed a method for calibrating or checking the calibration of a machine tool that comprises a first pan that is moveable relative to a second part. The first parr of the machine tool comprising a calibration device having at least a first calibration artefact and a second calibration artefact. The second part of the machine tool comprising a measurement probe. The method includes the step of using the measurement probe to measure the position of a plurality of points on the surface of each of the first and second calibration artefacts. These measurements are used to establish a position of the first calibration artefact and a position of the second calibration artefact. A reference measurement point is then defined for the calibration device that has a fixed position relative to the established positions of the first and second calibration artefacts. The calibration artefacts may comprise spheres.

Document US 2003/037588 A1 discloses a calibration system and method for a multi-toolhead machine. A calibration device is installed onto the machine. When a first toolhead is calibrated with respect to the calibration device, based upon the change in position between the first toolhead and a predetermined reference on the calibration device, all of the remaining toolheads are automatically calibrated. The system is set up by calibrating each toolhead with respect to the calibration device and determining an offset between the calibrated position of each toolhead and the calibration of the first toolhead.

### Summary of the invention

The said disadvantages can be eliminated by using the CNC machine according to this invention which core is based on the fact that on its mechanical subsystem, consisting of a working table, longitudinal guideways - the **X** motion axes positioned on lateral sides of the machine, and a gantry with one support moving along the **Y, Z** motion axes supporting a cutting head equipped with a drive system that provides tilting of a cutting tool along the **A, B** motion axes, or equipped with another additional supports with **Xᵢ, Y, Zᵢ** motion axes supporting another cutting heads equipped with the drive system provided for tilting the cutting tool along the **Aᵢ, Bᵢ** motion axes, there is a cutting tool position calibration station located in the working area of a cutting head or in overlapping working areas in the case of several cutting heads of the machine, that carries out the sensing of a real position of the cutting tool end position in the **x, y, z** directions, wherein **x**, **y, z** directions are parallel to respective **X, Xᵢ, Y, Z, Zᵢ** motion axes of the cutting machine, wherein the output of the calibration station is connected to the control system of the machine. The working area of a cutting head is defined by the motion range of respective motion axes. Automated check procedure of the real position of the cutting tool is carried out via the calibration station either automatically by the control system of the machine after a tool collision, or intentionally based on instructions of an operator. In the case that no offset has been identified between the real and the required positions, the process can continue. When an offset has been detected, the system turns to the autocalibration mode. The autocalibration mode starts with exchanging the end tip of the cutting head for a calibration tip. In the case that CNC cutting machine is equipped with automatic exchange of end tips of the cutting head, the process will be carried out automatically, otherwise, this process is carried out by an operator. The autocalibration mode will continue in identification of the real position of the calibration tip end point at the calibration station gradually in **x, y, z** coordinate axes direction. This identification serves for synchronizing the coordinate systems of the cutting head with the calibration tip, being offset from the required position, with the coordinate system of the calibration station. When the coordinate systems have been synchronized, the calibration tip of the cutting head is inserted into the calibration station, and the control system launches the calibration process during which the cutting head is gradually tilted within the range of possible tilting defined by the working area of the machine. During this process the control system of the machine via the calibration station records the data referring to the motion of the end point of the calibration tip in **x, y, z** coordinates axes direction. When the cutting head is set up precisely, motions of the end point of the calibration tip in respective axes direction will be 0. After completing of calibration, the control system evaluates the offsets of the calibration tip end point from the required precise position and calculates positional offsets by which the required values of the position in respective coordinate axes of the machine shall be corrected in order to achieve precise position of the calibration tip of the cutting head within its whole tilting range. After completing of this process the calibration tip is exchanged for the cutting tip automatically or by an operator, and in the following cutting process the corrections are automatically applied at generating a trajectory of the cutting tool end point by the control system interpolator. That is a self-learning process - autocalibration of the cutting tool position.

In the case that the CNC cutting machine is fitted with two or several cutting heads, then each cutting head, besides the first cutting head, should have an individual drive in **y** direction / along the **Y** motion axis / and it should include short additional **Xᵢ** motion axis along which the respective cutting head moves in the main **X** motion axis direction of the machine, thus in the **x** coordinate axis direction. In this case the autocalibration is carried out gradually for each cutting head alone at the same calibration station, wherein the cutting head should be located on the cutting machine in the place, where the working areas of all calibration heads are overlapped. After completing of the first cutting head calibration and defining its corrections the control system of the machine will perform the calibration of the second cutting head using the same method of calibration as in the case of the first cutting head calibration, wherein the correction of the trajectory in the **X, Y, Z** motion axes directions in the cutting process is applied on respective additional **Xᵢ** motion axis and **Y, Zᵢ** motion axes.

Provided that autocalibration has been applied, there is no need for use of mechanical setting of the cutting tool position in the cutting head, which significantly speeds up the calibration process of the machine and provides high precision of cutting, even if it is a machine with several cutting heads.

### Brief description of drawings

Fig. 1 Cutting machine with automatic setting up of cutting tool precise position in the cutting head by using autocalibration.
Fig. 2 Possible kinematical structures of the cutting head.

### Example of embodiment of the invention

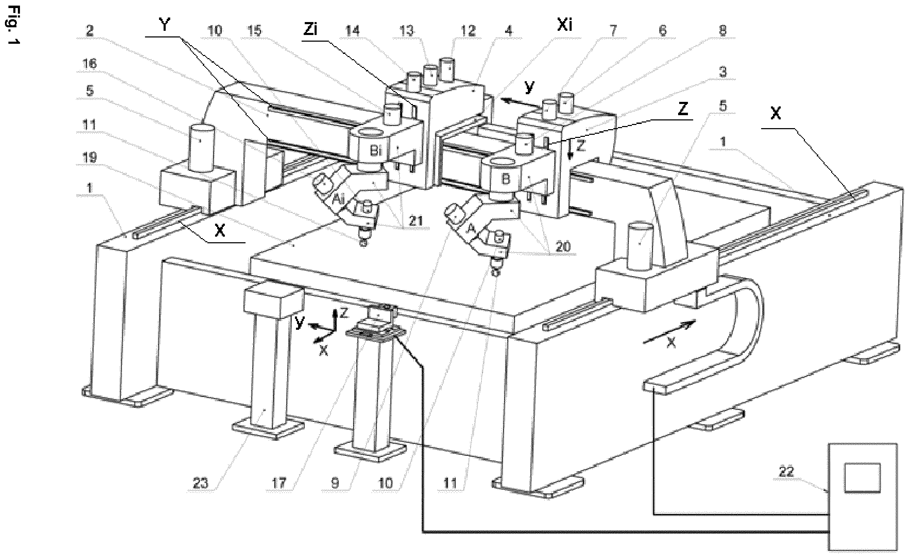

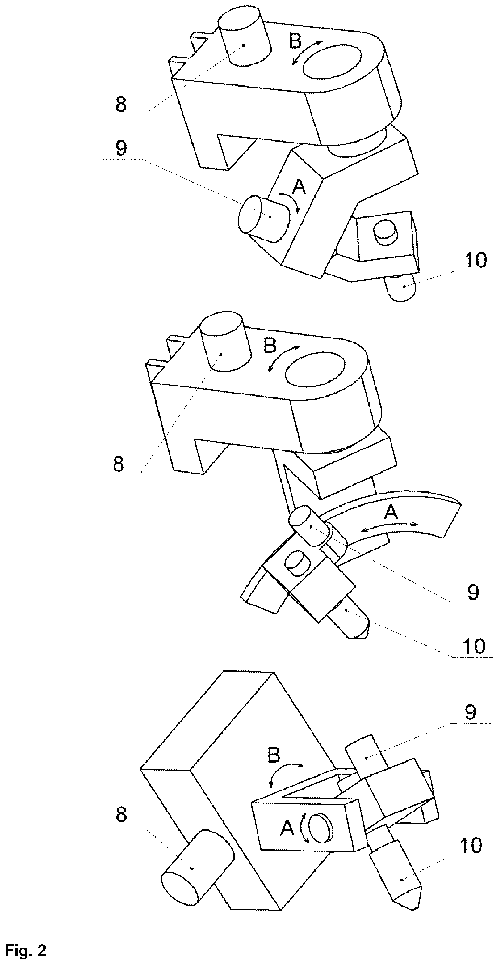

As an example of embodiment of this invention is the CNC cutting machine provided with one or several cutting tools as illustrated on the Fig. 1, equipped with a cutting head that enables tilting cutting tools in the cutting process in order to cut pieces with some bevels necessary for the following welding process, wherein the alternative possibilities of implementation of kinematical structures are described on Fig. 2

The cutting machine according to the invention includes lateral sides 1 with longitudinal **X** motion axes with drive 5, and a gantry 2 with the first support 3 having the **Y** motion axis with 6 and the **Z** motion axis with drive 7, supporting the first cutting head 20 which enables tilting of the cutting tool 10, provided with the **A** motion axis with drive 9 and the **B** motion axis with drive 8; a calibration station 17; a control system 22 with interpolator; cutting and calibration tip 11 stored in the end tips exchange unit 23; and a working table 19. Fig. 2 illustrates the alternatives of kinematics of the cutting head 20 that performs tilting of the cutting tool 10 in the cutting process. In case of requirement to carry out parallel cutting with several cutting tools 10, the cutting machine can include another additional supports, the second, third to i-th support 4, which are provided with **Xᵢ** motion axis with drive 12, **Y** motion axis with drive 13 and **Zᵢ** motion axis with drive 14. These i-th supports 4 support another cutting heads equipped with drive system which enable motion of the cutting tools 10 along the **Aᵢ** motion axis (drive 16) and **Bᵢ** motion axis (drive 15). The cutting tool 10 position calibration station 17 is placed in the working area of the cutting head 20 or in overlapping working areas of cutting heads 20, 21 if several cutting heads are used, which carries out sensing of the end point of the cutting tool in the **x, y, z** motion axes directions, wherein the output of the calibration station is connected to the control system 22 of the machine. The control system 22 of the machine after collision of the cutting tool 10 or upon instructions of an operator carries out the automatic control of the cutting tool real position through the calibration station 17. In the case that no offset has been detected between the real position and the required position, the cutting process will further continue. In the case that some offset has been detected, the system will turn to autocalibration mode. The autocalibration mode starts with exchanging the end tip of the cutting head 10 for the calibration tip 11. If the CNC cutting machine is provided with automatic exchanger 23 of end tips of the cutting head 20, 21, this process will be performed automatically, and in the case that the CNC cutting machine is not provided with the automatic exchanger 23, of end tips, the process is carried out by an operator. The autocalibration mode continues in identification of the real position of the end point of the calibration tip 11 at the calibration station 17 gradually in direction of the **x, y, z** coordinate axes. The identification serves for synchronizing the coordinate system of the cutting head 20, 21 with the calibration tip 11, being offset from the required position, with the coordinate system of the calibration station 17. When the coordinate systems has been synchronized, the calibration tip 11 of the cutting head is inserted into the calibration station 17 and the control system 22 launches the calibration process wherein the cutting tool 10 is gradually tilted within the range of possible tilting defined by the working area of the machine. During this process the control system 22 of the machine records data from the calibration station 17 about motion of the end point of the calibration tip 11 in the **x, y, z** coordinate axes direction. For ideal setting of the cutting head, the movements of the end point of the calibration tip 11 in directions of respective axes are zero. When calibration is terminated, the control system 22 will evaluate the offsets of the end point of the calibration tip 11 from the required precise position and calculate positional offsets, by which the required position values shall be corrected in respective coordinate axes of the machine to achieve the required position of the calibration tip 11 of the cutting head 10 within its whole tilting range. When this process is finished, the calibration tip 11 is exchanged automatically or by the operator for the cutting tip and then in the following cutting process corrections are automatically applied at generating the cutting tool 10 end-point trajectory by the interpolator of the control system 22. This is a self-learning process - autocalibration of position of the cutting tool 10.

If the CNC cutting machine is equipped with two or more supports 4 supporting cutting heads 20, 21, then the autocalibration is performed gradually for each cutting head 20, 21 respectively at the same calibration station, wherein the calibration station should be located on the cutting machine in overlapping working areas of all cutting heads. The control system of the machine after completing of the first cutting head calibration and defining the correction for the cutting head carries out calibration of the second, third up to i-th cutting head using the same process as in the case of the first cutting head, while the trajectory correction in direction of **X** motion axis during the cutting process is applied on the respective additional **Xᵢ** motion axis and **Y** motion axis.

The CNC machine according to the present invention does not require mechanical setting up of the cutting tool 10 in the cutting head 20, 21.

### List of the reference signs:

- 1: lateral sides of the machine
- X: motion axis for motion of gantry in **x** axis direction
- Y: motion axis for motion of support in **y** axis direction
- Z: motion axis for motion of cutting head in **z** axis direction
- A: motion axis for tilting the cutting head
- B: motion axis for tilting the cutting head
- Xᵢ: motion axis for motion of i-th support in **x** axis direction
- Zᵢ: motion axis for motion of i-th cutting head in **z** axis direction
- Aᵢ: motion axis for motion in **x** axis direction
- Bᵢ: motion axis for motion in **x** axis direction
- 2: gantry
- 3: first support
- 4: i-th support
- 5: X axis motion drive
- 6: Y axis motion drive
- 7: Z axis motion drive
- 8: B axis motion drive
- 9: A axis motion drive
- 10: cutting tool
- 11: calibration tip
- 12: Xᵢ axis motion drive
- 13: Y axis motion drive of the i-th support
- 14: Zᵢ axis motion drive
- 15: Bᵢ axis motion drive
- 16: Aᵢ axis motion drive
- 17: calibration station
- 19: working table
- 20: first cutting head
- 21: i-th cutting head
- 22: control system with interpolator
- 23: automatic exchanger of cutting head cutting tips

## Claims

1. The CNC machine adapted for cutting with plasma, oxygen and water jet as a cutting tool with automatic setting of its precise position in a cutting head by autocalibration, consisting of
• working table (19);
• longitudinal **X** motion axes on lateral sides (1) of the machine equipped with drives (5);
• gantry (2) provided with the first support (3) with **Y** motion axes with drive (6) and **Z** motion axis with drive (7), located on **X** motion axes, and supporting a cutting head (20) being equipped with the cutting tool (10) having **A** motion axis with drive (9) and **B** motion axis with drive (8) for tilting the cutting tool (10), and optional other additional i-th supports (4) with Xᵢ motion axes drive (12), **Y** motion axis with drive (13) and **Zᵢ** motion axis with drive (14), and supporting another cutting heads (21) provided with **Aᵢ** motion axis with drive (16) and **Bᵢ** motion axis with drive (15) for tilting another cutting tools (10);
• cutting tip; wherein the CNC machine also includes
• calibration tip (11) for exchanging the cutting tip of a cutting tool (10) to start the autocalibration;
• calibration station (17) for sensing the real position of the end point of the cutting tool (10) equipped with the calibration tip (11) within the whole range of its possible tilting and turning motions in the x, y, z directions and located in a working area of a cutting head (20) or in the case of several cutting heads in their overlapping working areas; and
• control system (22) with interpolator for comparing the values measured by the calibration station (17) with the required ones and calculating the correction values by which the required trajectory generated through its output for drives (5, 6, 7; 12, 13, 14) of respective **X , Y, Z** or **Xᵢ**, **Y ,Zᵢ** motion axes is corrected in the following cutting process, wherein the output of the calibration station (17) is connected to the input of the control system (22) wherein its output is coupled to **X, Y, Z,** motion axes drives (5, 6, 7) or **Xᵢ**, **Y, Zᵢ** motion axes drives (12, 13, 14) of the machine.

2. The CNC machine according to claim 1, **characterized in that** the cutting tip and the calibration tip (11) are placed in the exchanger (23) of the cutting head end tips, being preferably the automatic one.

## Patentansprüche

1. CNC-Maschine adaptiert zum Schneiden mit Plasma, Sauerstoff-Brennstoff und Wasserstrahl als Schneidwerkzeug mit automatischer Einstellung der präzisen Schneidwerkzeugposition in dem Schneidkopf durch Selbstkalibrierung, bestehend aus
• einem Werktisch (19);
• **X**-Längsbewegungsachsen auf den mit Antrieben (5) ausgerüsteten seitlichen Seiten (1) der Maschine;
• einer Brücke (2), versehen mit einem erstem Halter (3) mit einer **Y-**Bewegungsachse mit einem Antrieb (6) und mit einer **Z**-Bewegungsachse mit einem Antrieb (7), die auf den **X**-Bewegungsachsen angeordnet ist und die mit dem Schneidwerkzeug (10) ausgestatteten Schneidkopf (20) trägt, und mit einer **A**-Bewegungsachse mit einem Antrieb (9) und mit **B**-Bewegungsachse mit einem Antrieb (8) zum Kippen des Schneidwergzeuges, und optional mit weiteren zusätzlichen i-ten Haltern (4) mit **Xᵢ**-Bewegungsachsen mit einem Antrieb (12), mit **Y**-Bewegungsachse mit einem Antrieb (13) und **Zᵢ**-Bewegungsachse mit einem Antrieb (14), die die weiteren Schneidköpfe (21) tragen, die mit einer **Aᵢ**-Bewegungsachse mit einem Antrieb (16) und mit einer **Bᵢ**-Bewegungsachse mit einem Antrieb (15) zur Neigung weiterer Schneidwerkzeuge (10) versehen sind;
• einem Schneidaufsatz;
wobei die CNC-Maschine auch
• einen Kalibrieraufsatz (11) zum Austausch vom Schneidaufsatz des Schneidwerkzeuges (10) zum Starten der Selbskalibrierung;
• eine Kalibrierstation (17) zum Vermessen der tatsächlichen Endpunktposition des mit dem Kalibrieraufsatz (11) ausgestatteten Schneidwerkzeuges (10) innerhalb des gesamten Bereichs seiner möglichen Neigungs- und Drehbewegungen in der Richtung der einzelnen **x-**, **y-** und **z-**Koordinatenachsen, die in dem Arbeitsbereich des Schneidkopfes (20) bzw. in dem Durchschnitt der Arbeitsbereichen im Falle von mehreren Schneidköpfen angeordnet ist;
und
• ein Steuerungssystem (22) mit einem Interpolator zum Vergleich der von der Kalibrierstation (17) gemessenen Werte mit den Sollwerten und zum Berechnen der Korrekturwerte, mit denen die erforderliche Trajektorie, die durch seinen Ausgang für Antriebe (5, 6, 7; 12, 13, 14) berechnet wird, entlang der jeweiligen **X-, Y-**, **Z-,** bzw. **Xᵢ**-, **Y-**, **Zᵢ**-Bewegungsachsen im Folgeschneidvorgang korrigiert wird, wobei der Ausgang der Kalibrierstation (17) mit dem Eingang des Steuersystems (22) verbunden ist, das durch seinen Ausgang mit den Bewegungsachsenantrieben (5, 6, 7) entlang der **X-, Y-**, **Z**-Bewegungsachsen oder mit den Bewegungsachsenantrieben (12, 13, 14) entlang der **Xᵢ-**, **Y-**, **Zᵢ-**Bewegungsachsen der Maschine in Verbindung steht,
enthält.

2. CNC-Maschine nach Anspruch 1, **dadurch gekennzeichnet, dass** der Schneidaufsatz und der Kalibrieraufsatz (11) in einem - bevorzugt automatischen - Tauscher (23) für die Endaufsätze der Schneidköpfe angeordnet sind.

## Revendications

1. La machine CNC, adapté pour couper au plasma, oxygène ou jet d'eau qui est un dispositif de découpe muni d'un réglage automatique auto calibrant de la position précise du dispositif de coupage situe dans la tête haveuse est composée de:
• La table de travail (19);
• Des arbres mouvant longitudinaux **X** sur les côtés latéraux (1) de la machine équipée de mécanismes de propulsion (5);
• Du portail (2) constitué d'un premier support (3) ayant un arbre mouvant **Y** avec mécanisme de propulsion (6) et d'un arbre mouvant **Z** avec mécanisme de propulsion (7), situé sur les arbres mouvant X et portant la tête haveuse (20) équipée d'un dispositif servant à couper (10), et d'un arbre mouvant **A** avec mécanisme de propulsion (9) et d'un arbre mouvant **B** avec mécanisme de propulsion (8) pour incliner l'outil de coupe (10), et d'autres i-éme supports facultatifs (4) ayant un arbre mouvant Xᵢ avec mécanisme de propulsion (12), des arbres mouvant **Y** avec mécanisme de propulsion (13) et arbre mouvant **Zᵢ** avec mécanisme de propulsion (14) et portant d'autres têtes haveuses (21) munies d'un arbre mouvant **Aᵢ** avec mécanisme de propulsion (16) et d'un arbre mouvant **Bᵢ** avec mécanisme de propulsion (15) pour l'inclinaison d'autres dispositifs servant à couper (10);
• D'un embout coupant;
Tout en précisant que la machine CNC comporte également
• Un embout de mesures (11) pour échanger l'embout coupant du dispositif servant à couper (10) en vue de commencer l'auto calibration;
• Un appareil d'enregistrement de mesures (17) servant à mesurer la position effective du point terminus du dispositif servant à couper (10), équipé d'un embout de mesures (11) dans toute l'étendue de ses inclinaisons possibles et de rotations dans le sens des coordonnées des axes **x, y, z** et situé dans le zone de travail de la tête haveuse (20), ou dans l'intersection des leur zones de travail dans le cas de pluralité de têtes haveuses;
Et
• un système de gestion (22) muni d'un interpolateur afin de comparer les valeurs enregistrées par l'appareil d'enregistrement de mesures (17) à des valeurs requises et afin de calculer les valeurs de correction qui au cours du procédé de coupage qui suit déforme la trajectoire générée par son output pour les mécanismes de propulsions (5, 6, 7; 12, 13, 14) le long des arbres mouvant **X, Y, Z ,** respectivement **Xᵢ**, **Y** ,**Zᵢ** , tout en précisant que la sortie de l'appareil d'enregistrement de mesures (17) est
• connectée à l'entrée du système de gestion (22), qui est interconnecté par sa sortie avec les mécanismes de propulsion (5, 6, 7) le long des arbres mouvant **X, Y, Z,** ou aux mécanismes de propulsion (12, 13, 14) le long des arbres mouvant **Xᵢ**, **Y, Zᵢ** de la machine.

2. La machine CNC, selon la revendication 1, **caractérisée par le fait que** le embout coupant et à mesurer (11) sont placés dans l'échangeur (23) des embouts finaux de la tête haveuse, l'échangeur étant avantageux automatique.
